## Europäisches Patentamt
## European Patent Office
## Office européen des brevets

(11) Publication number: **0 117 002**
**B1**

(12) **EUROPEAN PATENT SPECIFICATION**

(45) Date of publication of the patent specification:
**17.09.86**

(21) Application number: **84200195.0**

(22) Date of filing: **14.02.84**

(51) Int. Cl.⁴: **B 65 B 25/04,** A 23 L 1/216,
A 23 B 7/144

(54) Method for packing a moist fresh chilled food product, especially fresh chilled pre-fried French fries, into boxes.

(30) Priority: **16.02.83 NL 8300582**

(43) Date of publication of application:
**29.08.84 Bulletin 84/35**

(45) Publication of the grant of the patent:
**17.09.86 Bulletin 86/38**

(84) Designated Contracting States:
**AT BE CH DE FR GB IT LI LU NL SE**

(56) References cited:
**AT - B - 356 492**
**FR - A - 1 596 500**

(73) Proprietor: **"DE FRITESSPECIALIST" B.V., Spiktweg 50,
NL-5943 AD Lomm (NL)**

(72) Inventor: **Zikken, Jan, Bakenbergseweg 272 B,
NL-6816 PE Arnhem (NL)**

(74) Representative: **van der Beek, George Frans et al,
Nederlandsch Octrooibureau Johan de Wittlaan 15 P.O.
Box 29720, NL-2502 LS 's-Gravenhage (NL)**

ACTORUM AG

# Descriptions

The invention relates to a method for packing a moist fresh chilled food product, especially fresh chilled pre-fried French fries, into boxes.

The industrial processing of potatoes has assumed enormous proportions. A major part of the potatoes is processed to pre-fried products (French fries and such like products).

About pre-fried French fries one should distinguish between so called fresh chilled fries stored at a temperature between 1 and 5° C, and deep frozen fries stored at a temperature of about — 18° C. Fresh chilled pre-fried products having a moisture content of 50 to 75 % are subject to decay. The cooled storage of French fries is limited to 7 — 14 day. This short time period is an important disadvantage of fresh chilled French fries. This is the reason that the enormous increase of pre-fried potato products is substantially taken by the deep frozen product having a long storage life. Despite good potential possibilities of fresh chilled fries this product does not have the same commercial success.

It is known to prolong the keeping quality of certain food products like meat and meat products by bringing these products into a package, evacuating the package, supplying a controlled atmosphere gas containing nitrogen and/or carbon dioxide, and closing the package hermetically. This method is not suitable for packing a moist product like fresh pre-fried French fries into rather slack boxes, because on the one hand a controlled atmosphere containing nitrogen only has insufficient influence on the keeping quality, whereas on the other hand from a mixture of nitrogen and carbon dioxide which would have a sufficient influence, the carbon dioxide would be absorbed for an important part by the moist product which would lead to a situation in which a strong under pressure could exist in the gas tight boxes which could lead to imploding of the boxes. It will be clear that it is essential for the practice of storage and distribution that the boxes may be piled up without any problem and that dented boxes are unacceptable for commercial reasons.

On the other hand vacuum resistant boxes are too expensive.

It is an object of the invention to avoid these disadvantages and to provide a packing method by means of which a moist fresh chilled food product may be packed under carbon dioxide containing controlled atmosphere into gas tight, rather slack boxes without having the risk of implosion of the boxes.

According to the invention the prepared product is maintained in a carbon dioxide atmosphere during a time period of at least 20 minuten and sufficient to let so much carbon dioxide penetrate into the product that saturation is substantially obtained, and the boxes in which the thus saturated product is contained are closed in a carbon dioxide containing controlled atmosphere.

Usually the gas to be fed into the boxes will consist of a mixture of carbon dioxide and nitrogen.

The product in the boxes is tenable during at least three weeks without loss of quality when it is in a cooled condition that is to say at a temperature between 0 and 5° C. As the food product is substantially saturated with carbon dioxide, the carbon dioxide of the controlled atmosphere present in the gas tight boxes will not be absorbed by the product and no under pressure will be formed in the package.

Preferably the product, moving through a housing, lies on a perforated conveyor for 20 to 60 minutes, a substantially complete carbon dioxide atmosphere being present in that housing. The time that the product has to be present inside this carbon dioxide containing housing will depend on the size of the product particles.

It is also possible to saturate the product with carbon dioxide when it is already placed in the boxes.

Austrian patent specification 356 492 discloses a method of preparing a fried potato product (slices, chips, fries). The purpose of this method is to reduce the fat content. The potato pieces are impregnated with a starch solution or suspension and this treated product is subjected to an intermediate drying at 80 to 220° C. Finally the product is dried to the desired water content by heating it in a frying liquid. The intermediate drying at 80 to 220° C takes place in a carbon dioxide or nitrogen containing atmosphere, which despite the high temperature leads to a light-coloured product of good flavour. The intermediate drying time is 12 to 18 minutes. This is not enough to achieve saturation of the product with the inert gas.

French patent application 1 596 500 discloses a packing method for chips wherein oxygen in the package is replaced by an inert gas like carbon dioxide to increase the keeping quality of the product. The package is tube shaped and closed by covers so that no oxygen can penetrate into the package. To prevent imploding the package must be strong and stiff.

The invention will further be elucidated with the aid of the schematic figure showing a cross-section of a device for the saturation with carbon dioxide of a fresh moist food product like fresh pre-fried French fries.

The shown device comprises a housing 1 having a feed opening 2 for passing a food product supplied by a conveyor 3. A carbon dioxide line 4 opens into the housing and includes a valve 5. This valve is controlled by a control device 6 reacting on signals of a feeler 7. A perforated conveyor, comprising three conveyor belts 8a, 8b, 8c one above the other, is mounted in the housing. The product is moved from above downwards in a zig-zag pattern by the conveyor belts through the housing 1.

The discharge end of the conveyor belt 8c terminates above an elevating conveyor 9 being a conveyor belt with carriers 10 moving along the walls of a discharge tube 11.

The discharge end of the conveyor belt 10 terminates above a belt 12 leading to a device for packing the treated product under controlled atmosphere in gas tight boxes.

The purpose of this device is to saturate the fresh chilled product (temperature between 0 and 5° C) with carbon dioxide before it is transported into boxes in which a controlled atmosphere consisting of a mixture of carbon dioxide and nitrogen is formed before the boxes are closed in a gas tight way. The ratio of nitrogen and carbon dioxide will vary between 4:1 and 1:4.

By this pre-treatment it is prevented that the carbon dioxide present in the air tight boxes can penetrate into the product and the pressure in the boxes could be reduced so that these boxes would implode.

By storing the pre-fried French fries, or other suitable food product, chilled between 0 and 5 °C in the controlled atmosphere, the keeping quality is increased to a period of at least three weeks. Without such a controlled atmosphere this keeping quality would be limited to 7 — 14 days.

The duration of the treatment of the product in the housing is 20 to 60 minutes dependent on the size of the product particles. The valve 5 controlling the supply of carbon dioxide through line 4 is opened if the feeler 7 gives the signal to the device 6 that there is too much air and not enough carbon dioxide. In principle the housing should be filled with carbon dioxide substantially up to the roof.

Obviously several modifications of the shown device are possible. A rotating sluice 13 could be mounted in the supply opening 2 and also the discharge of the treated product can take place through a rotating sluice.

The disclosed method can also be applied for the pre-treatment of other products than fresh chilled French fries. For instance the method is suitable for rösti, blanched potatoes, croquettes, vegetables for putting in soup. It is possible to drive the air out of the boxes by means of the carbon dioxide/nitrogen stream. Another possibility is that the air is removed from the boxes and that thereafter the gas is admitted.

The saturation of the product with carbon dioxide can also take place after the product is supplied in the boxes. For instance the filled open boxes could be positioned in a carbon dioxide containing house after which the boxes are closed in a controlled atmosphere.

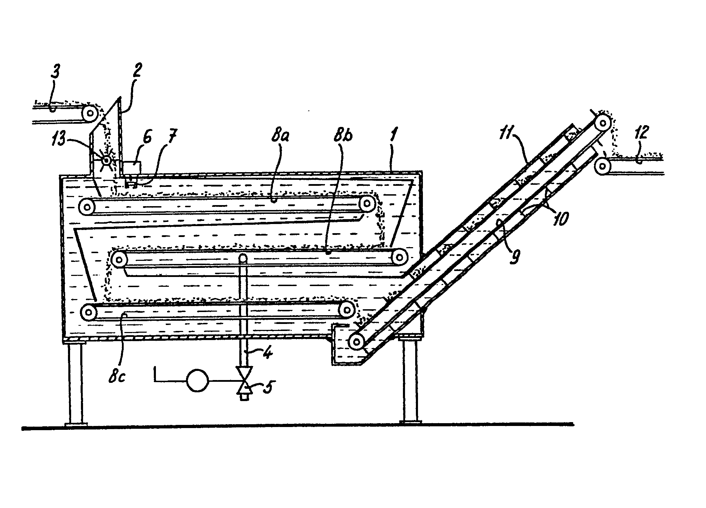

## Claims

1. A method of packing a moist fresh chilled food product, especially fresh chilled pre-fried French fries into boxes, characterised in that the prepared product is maintained in a carbon dioxide atmosphere during a time period of at least 20 minutes and sufficient to let so much carbon dioxide penetrate into the product that saturation is substantially obtained, and that the boxes in which the thus saturated product is contained are closed in a carbon dioxide containing controlled atmosphere.

2. A method according to claim 1, characterised in that the product, lying on a perforated conveyor, is moved through a housing in which a substantially complete carbon dioxide atmosphere is present for 20-60 minutes.

3. A method according to claim 1, characterised in that the product is substantially saturated with carbon dioxide while the product is in the boxes.

## Patentansprüche

1. Verfahren zum Verpacken in Schachteln von einem feuchten, frischen, gekühlten Nahrungsmittelprodukt, insbesondere von frischen, gekühlten, vorgebratenen Pommes Frites, dadurch gekennzeichnet, dass das hergestellte Produkt in einer Kohlenstoffdioxid-Atmosphäre während einer Zeitdauer von mindestens 20 Minuten und genügend lang gehalten wird, um zu bewirken, dass soviel Kohlenstoffdioxid in das Produkt eindringt, als dass im wesentlichen eine Sättigung erreicht wird, und dass die Schachteln, in denen das so gesättigte Produkt enthalten ist, in einer kontrollierten Kohlenstoffdioxid enthaltenden Atmosphäre geschlossen werden.

2. Verfahren nach Anspruch 1, dadurch gekennzeichnet, dass das auf einem gelochtem Förderband liegende Produkt durch ein Gehäuse bewegt wird, in dem während 20 bis 60 Minuten eine im wesentlichen vollständig aus Kohlenstoffdioxid bestehende Atmosphäre herrscht.

3. Verfahren nach Anspruch 1, dadurch gekennzeichnet, dass das Produkt mit Kohlenstoffdioxid im wesentlichen gesättigt wird, während sich das Produkt in den Schachteln befindet.

## Revendications

1. Procédé d'emballage en boîtes d'un produit alimentaire frais, humide et tenu au frais, particulièrement de pommes à pommes frites, pré-frites, fraîches et tenues au frais, caractérisé en ce que l'on maintient sous atmosphère de gaz carbonique le produit préparé, pendant une durée d'au moins 20 minutes et qui est suffisante pour faire pénétrer dans le produit une quantité de gaz carbonique telle que la saturation est essentiellement atteinte, et que l'on ferme sous atmosphère contrôlée contenant du gaz carbonique les boîtes dans lesquelles est contenu le produit ainsi saturé.

2. Procédé selon la revendication 1, caractérisé en ce que l'on déplace le produit reposant sur un convoyeur perforé à travers un boîtier dans lequel est présente pendant 20 à 60 minutes une atmosphère essentiellement complètement composée de gaz carbonique.

3. Procédé selon la revendication 1, caractérisé en ce que le produit est essentiellement saturé de gaz carbonique pendant que le produit se trouve dans les boîtes.